# EUROPEAN PATENT APPLICATION

(11) **EP 2 683 128 A1**
(43) Date of publication of application: **08.01.2014**
(21) Application number: 12305803.4
(22) Date of filing: 05.07.2012
(51) Int. Cl.: H04L 29/06, H04W 84/20

(54) **A method for communicating data between a first device and a second device, corresponding second device and system**

(71) Applicant: Gemalto SA, 92190 Meudon (FR)
(72) Inventor: Delsuc, Julien, 13705 La Ciotat (FR); Chafer, Sylvain, 13705 La Ciotat (FR); Krishna, Ksheerabdhi, 13075 La Ciotat (FR)

(57) **Abstract**

The invention relates to a method 20 for data.

According to the invention, a first device 12 including or being connected to a Man Machine Interface, the first device supporting a first profile as slave, the first device supporting a second profile as master, a second device 14 supporting at least the first profile as master, the method comprises the following steps:
- the first device, as master, sends to the second device, as slave, data 214 relating to an address of the first device, said first device address;
- the second device stores the first device address; and
- the second device, as master, sends to the first device, as slave, data 236 relating to an address of the second device, said second device address, by using the first profile.

The invention also pertains to corresponding second device 14 and system.

## Description

### Field of the invention:

The invention relates, in a general manner, to a method for communicating data between a first device and a second device.

The present invention is notably but not exclusively applicable to two Bluetooth (registered Trademark) enabled devices.

Moreover, the invention also pertains to a second device for communicating data with a first device.

Finally, the invention concerns a system for communicating data, as well.

### State of the art:

A known solution for communicating data between two devices is based upon a use of a display screen and a keyboard, so as to establish a Bluetooth link, as short range wireless link, between the two devices. Firstly, a master device user selects an application for detecting one or several devices that are within a short range distance. The master device looks for each present Bluetooth enabled device by sending a request for providing the master device with a Bluetooth enabled device name and a corresponding address. When one or several Bluetooth enabled devices are detected in the vicinity, the master device sends to each found Bluetooth enabled device by using its address a service discovery request, so as to discover a capability(ies) or profile(s) offered by the Bluetooth enabled device. Each slave device sends back a list of profiles that the slave device supports. The master device displays a list of the detected Bluetooth enabled device names the ones whose profile is supported as master. Then, the master device user selects one slave device which the master device user desires to establish a Bluetooth link with. The master device may exchange data with the slave device.

However, such a known solution implies that the master device is equipped with a display screen for displaying data and a keyboard for selecting a device, as Man Machine Interface (or MMI), in particular when the master device faces several devices without being able to select one slave device, as its interlocutor.

There is therefore a need to establish a connection between two devices while one master device is not mandatorily equipped with any MMI without installing any additional application.

### Summary of the invention:

The invention proposes a solution for satisfying the just herein above specified need by providing a method for communicating data between a first device and a second device.

According to the invention, a first device includes or is connected to a Man Machine Interface. The first device supports a first profile as slave. The first device supports a second profile as master. A second device supports at least the first profile as master. The method comprises the following steps. The first device, as master, sends to the second device, as slave, data relating to an address of the first device, said first device address. The second device stores the first device address. And the second device, as master, sends to the first device, as slave, data relating to an address of the second device, said second device address, by using the first profile.

The principle of the invention consists in initiating a data exchange by a first device, as master, that accesses a MMI while transmitting its address to a second device, as slave, which then uses the address of an originator or sender of the received data, to connect back, as master, by sending its own address.

It is to be noticed that the first device supports two or more profiles, one profile as master and another profile as slave while the second device may support only a single profile, namely one profile as master.

There is no need to install any application onto the first device.

Contrary to the herein above described known solution, thanks to a retrieval of an address of its interlocutor, the second device, as master, submits automatically its address to the first device, so as to establish a connection or link with the first device, as slave.

The invention solution does not require any user intervention at the second device. The invention solution is therefore user friendly.

There is therefore no need that the second device, as master, is equipped with an MMI, so as to establish a connection with the first device.

The first device changes, during the data exchange with the second device, its profile and its role from a master role to a slave role.

There is no need that the second device supports another profile.

Thanks to the invention mechanism, the second device is enabled to access, amongst a possible plurality of possible devices, the first device while selecting this latter through the MMI accessible from the first device.

According to a further aspect, the invention is a second device for communicating data with a first device.

According to the invention, a first device includes or is connected to a Man Machine Interface. The first device comprises means for supporting a first profile as slave. The first device comprises means for supporting a second profile as master. A second device comprises means for supporting at least the first profile as master. The second device is adapted to receive, as slave, data relating to an address of the first device, said first device address. The second device is adapted to store the first device address. And the second device is adapted to send, as master, to the first device, as slave, data relating to an address of the second device, said second device address, by using the first profile.

The second device may be a portable device or a token.

Within the present description, the token is a smart object that is intended to communicate with the outside world. The token is any electronic medium that may have different form factors. The token may be a chip, as embedded chip, soldered to a host device, like a device without any display screen and no keyboard, only one button or a few buttons.

According to still a further aspect, the invention is a system for communicating data.

According to the invention, the system comprises a first device and at least one second device. The first device includes or is connected to a Man Machine Interface. The first device comprises means for supporting a first profile as slave. The first device comprises means for supporting a second profile as master. The second device comprises means for supporting at least the first profile as master. The first device, as master, is adapted to send to the second device, as slave, data relating to an address of the first device, said first device address. The second device is adapted to store the first device address; and send, as master, to the first device, as slave, data relating to an address of the second device, said second device address, by using the first profile.

As first device, it may be a mobile (tele)phone, a Personal Digital Assistant (or PDA), a palm-top computer, a laptop computer, a portable TeleVision (or TV), a netbook, a tablet computer, a game console, a printer, a facsimile machine, a Personal Computer (or PC) or any other terminal equipped with or connected to a MMI.

### Brief description of the drawings:

Additional features and advantages of the invention will be more clearly understandable after reading a detailed description of one preferred embodiment of the invention, given as an indicative and non-limitative example, in conjunction with the following drawings:

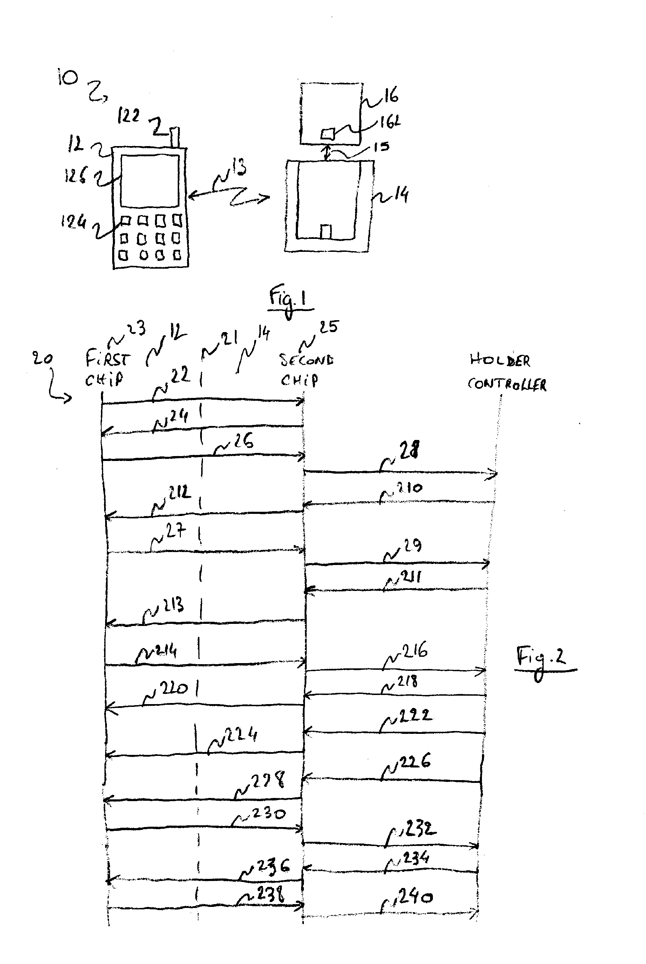

- Figure 1 illustrates a simplified diagram of one exemplary embodiment of a system including a mobile phone and a portable device, the portable device being adapted to establish a Bluetooth type connection with the mobile phone, according to the invention; and
- Figure 2 represents a simplified message flow of one exemplary embodiment of a method implemented by the mobile phone and the portable device of figure 1, so that the portable device, as master, establishes a Bluetooth type connection with the mobile phone, as slave, after an initiation of the connection carried out by the mobile phone, as master.

### Detailed description:

Herein under is considered a case in which the invention method for communicating data between a first and a second device is implemented by a mobile phone, as first device, and a portable device, as second device, in cooperation with a smart card, as token and third device.

According to another embodiment, the invention method for communicating data between a first device and a second device is implemented by a first device in cooperation with a second device, as standalone entity. In other words, the second device does not cooperate with any device, so as to access the first device. According to such an embodiment (not represented), the second device is adapted to carry out the functions that are carried out by the second device and the token and that are described infra.

The infra described invention embodiment is implemented by using a Bluetooth type communication protocol, like a Bluetooth communication protocol or a Bluetooth Low Energy (or BLE) communication protocol.

However, the present invention applies to any communication protocol, like Zigbee, in which the first device is able to play both roles of master and slave while the second device is able to play at least one role of master.

Within the present description, roles of master/slave belong to a model for a communication protocol in which one device, as master, controls one or a plurality of other devices, as slaves. A master initiates a connection with one or several slaves. Once the connection is established, a direction of control of the communication is from the master to the slave(s).

**Figure 1** shows a system 10 for communicating data.

The system 10 comprises a mobile phone 12, as first device and user terminal, a smart badge holder 14, as electronic portable device and second device, and a smart card 16, as token and third device.

For the sake of clarity and conciseness, the mobile phone 12, the smart badge holder 14 and the smart card 16 are termed hereinafter the phone 12, the holder 14 and the card 16 respectively.

As to the user terminal, it may be any device including means for processing data, comprising or being connected to short range wireless communication means containing an antenna for exchanging data with outside, comprising or being connected to means for interfacing with a user, as MMI, like a keyboard, a loudspeaker (not represented) and/or a display screen, and comprising or being connected to means (not represented) for storing data.

Within the present description, the adjective "wireless" used within the expression "wireless communication means" signifies notably that the communication means communicates via one or several Radio-Frequency (or RF) links that have a range distance that is more or less short.

The RF of such a short range wireless link may be fixed in a band, for instance, from around 2,4 GHz to around 2,48 GHz relating to a Bluetooth type technology. Typically, the distance between the phone 12 and the holder 14 may be up to 100 m.

The phone 12 may comprise a long range wireless antenna 122 for exchanging data with one or several mobile radio-communication network(s) (not represented).

The mobile radio-communication network(s) 16 may be constituted by a Global Service for Mobiles (or GSM), a General Packet Radio Service (or GPRS), a Universal Mobile Telecommunications System (or UMTS), a Code Division Multiple Access (or CDMA) and/or a Long Term Evolution (or LTE) type network(s).

The mobile radio-communication network list is not exhaustive but only for exemplifying purposes.

The phone 12 includes preferentially a keyboard 124 and a display screen 126, as phone MMI.

Alternately, instead of a separate keyboard, the display screen (not represented) integrates a touch sensitive keyboard.

According to an alternative, instead of incorporating an MMI, the user terminal is connected to an MMI.

The phone 12 may also be equipped with one or several card readers (not represented).

The phone 12 includes preferably at least one microprocessor (not represented), as data processing means, at least one memory (not represented), as data storing means, and several Input/Output (or I/O) interfaces.

The phone microprocessor processes data originating from either a phone memory or, through one or several phone I/O interfaces, outside.

The phone 12 includes or is connected to a Bluetooth type RF interface, as I/O interface, that is able to communicate, over a bi-directional Bluetooth type RF link 13, as short range wireless link, with the holder 14.

Alternatively, instead of a short range wireless link, the phone 12 is connected, via a wire link, to the holder 14.

The phone microprocessor is preferably connected to a first chip (not represented).

The first chip is included within a first module (not represented).

The first chip is dedicated to managing a Bluetooth type RF interface, as short range wireless interface.

The phone memory stores data including executable data and not-executable data.

The phone memory stores preferably data relating to a physical address of the phone 12, as phone address, to be used by a phone interlocutor for exchanging data, over the short range wireless link 13.

The phone address may be a 6 byte size.

According to another embodiment, the first chip stores the phone address to be used by a phone interlocutor for exchanging data, over the short range wireless link 13.

The phone memory stores preferably data relating to two or more profiles. The profiles include one or several profiles as slave, as first profile, and one or several profiles as master, as second profile.

According to another embodiment, the first chip stores data relating to two or more profiles.

As data stored within the phone memory, it may contain:
an International Mobile Equipment Identity (or IMEI) or the like, as phone identifier;
a phone book including a list of one or several phone numbers to be dialed to access corresponding phone(s);
a Uniform Resource ldentifier(s) (or URI) or a Uniform Resource Locator(s) (or URL) of a server(s) (not represented) to be addressed;
an Internet Protocol (or IP) address(es) of a server(s) (not represented) to be addressed;
an Operating System (or OS); and/or
one or several applications.

The phone 12 supports at least two different profiles. More exactly, the phone 12 supports at least one profile as slave, as first profile, and at least one profile as master, as second profile.

For instance, the first profile includes at least one of the following profiles which are compliant with a technical standard relating to Bluetooth, like Bluetooth 1.0 or later version:
a Personal Area Network (or PAN) profile;
a Subscriber Identity Module (or SIM) access profile.

For instance, the second profile includes at least one of the following profiles which are compliant with a Bluetooth type standard, like Bluetooth 1.0 or later version:
a headset profile;
a hands-free profile.

As application(s) supported by the phone 12, there is a first application allowing the phone 12 to communicate, over the short range wireless link 13, via the first chip and the holder 14, with the card 16. The first application may be selected by a user through a menu that is displayed at the phone display screen 126.

The first module comprises the first chip and a first short range wireless antenna (not represented) that is connected to the first chip.

The first chip includes first Bluetooth type communication means, as short range wireless communication means.

The first chip comprises preferably a first RF transmitter (not represented), a first RF receiver (not represented), a first base-band processor and a first link controller.

The first base-band processor is connected to the first link controller, the first RF transmitter and the first RF receiver.

The first base-band processor and the first link controller are both connected, via a Host Control Interface (or HCl), to the phone microprocessor, as phone controller. The HCl is used for exchanging one or several control commands, one or several responses and/or user data in an HCl data packet(s). The HCl data packet(s) include(s) commands, events and data packets.

The first base-band processor converts an HCl data packet that is received from a first chip controller, namely the phone microprocessor, into a data packet suitable for its RF transmission. The first base-band processor provides the first RF transmitter with a data packet for a Bluetooth type wireless communication.

The first base-band processor converts a data packet that is received from the first RF receiver into an HCl data packet. The first base-band processor provides the first chip controller with an HCl data packet.

The first link controller controls, under the control of the first chip controller, the first module chip, so as to exchange an HCl data packet with the first chip controller.

The first RF transmitter modulates a data packet that is received from the first base-band processor into a predetermined frequency band and amplifies a corresponding modulated RF signal prior to its transmission to outside.

The first RF receiver receives a modulated RF signal, demodulates this latter to obtain a data packet. The first RF receiver outputs the obtained data packet to the first base-band processor.

The first module is coupled, over the short range wireless link, to the holder 14.

The holder 14 includes preferably at least one microprocessor (not represented), as data processing means, at least one memory (not represented), as data storing means, and several I/O interfaces.

The holder 14 plays a role of an intermediary entity between the phone 12, as user terminal, and the card 16.

The holder 14 has preferably either no MMI, as user interface, or a limited MMI, such as one or two buttons.

The holder 14 is able to communicate, over a Bluetooth type wireless link, with any of Bluetooth enabled devices that are sufficiently closed to the holder 14.

When several Bluetooth enabled devices (only the phone 12 is represented), like a phone(s), a game console(s), a tablet(s), a TV(s), a printer(s), a set-top box(es) and/or other other(s), are in the vicinity of the holder 14, the holder 14 is able to select, amongst all the Bluetooth enabled devices, the phone 12 to pair with.

The holder 14 includes or is connected to a Bluetooth type RF interface, as I/O interface, that is able to communicate, over a bi-directional Bluetooth type RF link 13, with the phone 12.

The holder microprocessor is preferably connected to a second chip (not represented).

The second chip is included within a second module (not represented).

The second chip is dedicated to managing a Bluetooth type RF interface, as short range wireless interface.

The second module comprises the second chip and a second short range wireless antenna (not represented) that is connected to the second chip.

The second chip includes second Bluetooth type communication means, as short range wireless communication means.

The second chip comprises preferably a second RF transmitter (not represented), a second RF receiver (not represented), a second base-band processor and a second link controller.

The second base-band processor is connected to the second link controller, the second RF transmitter and the second RF receiver.

The second base-band processor and the second link controller are both connected, via a HCl, to the holder microprocessor, as holder controller. The HCl is used for exchanging one or several control commands, one or several responses and/or user data in an HCl data packet(s). The HCl data packet(s) include one or several commands, events and data packets.

The second base-band processor converts an HCl data packet that is received from a second chip controller, namely the holder microprocessor, into a data packet suitable for its RF transmission. The second base-band processor provides the second RF transmitter with a data packet for a Bluetooth type wireless communication.

The second base-band processor converts a data packet that is received from the second RF receiver into an HCl data packet. The second base-band processor provides the second chip controller with an HCl data packet.

The second link controller controls, under the control of the second chip controller, the second module chip, so as to exchange an HCl data packet with the second chip controller.

The second RF transmitter modulates a data packet that is received from the second base-band processor into a predetermined frequency band and amplifies a corresponding modulated RF signal prior to its transmission to outside.

The second RF receiver receives a modulated RF signal, demodulates this latter to obtain a data packet. The second RF receiver outputs the obtained data packet to the second base-band processor.

The holder memory stores data including executable data and not-executable data.

The holder memory stores preferably data relating to a physical address of the holder 14, as holder address, to be used by a holder interlocutor for exchanging data, over the short range wireless link 13.

The holder address may be a 6 byte size.

According to another embodiment, the second chip stores the holder address to be used by a holder interlocutor for exchanging data over the short range wireless link 13.

According to still another embodiment, the holder 14 transmits the holder address to the card 16 that stores the holder address to be used by a holder interlocutor for exchanging data over the short range wireless link 13.

The holder memory stores preferably data relating to only one or several profiles as master, as first profile.

According to another embodiment, the second chip stores data relating to one or several profiles as master, as first profile.

For instance, the first profile includes at least one of the following profiles which are compliant with a Bluetooth type standard:
- a PAN profile;
- a SIM access profile.

The holder 14 is adapted to let the phone 12 initiate a connection of the Bluetooth type by using a profile as master that is supported by the phone 12 but not mandatorily by the holder 14. Such an initiation of the connection by the phone 12 allows the holder 14 to collect the phone address and to continue the initiated connection while using the supported first profile.

Further to a connection initiated by the phone 12 as master, the holder 14 is adapted to:
- receive, as slave, the (physical) address of the phone 12, as master;
- store the phone address;
- send, as master, to the phone 12, as slave, the holder address by using, for instance, the PAN profile, as first profile.

Alternatively, instead of the holder 14, the second chip stores the phone address.

According to another alternative, instead of the holder 14, the holder 14 transmits the phone address to the card 16 stores the phone address.

The holder 14 may be connected to a fingerprint reader allowing to capture one or several fingerprints of a user.

The holder 14 is connected, through a bi-directional link 15, to the card 16.

The holder 14 comprises a card reader allowing to read a smart card.

The holder I/O interface includes an I/O interface, so as to exchange data with the card 16.

The holder I/O interface with the card 16 may be an International Organization for Standardization (or ISO) 7816 interface or a USB (acronym for "Universal Serial Bus") interface, as a contact interface when the card 16 is inserted within or connected to the holder 14.

Alternately, the holder I/O interface with the card 16 is constituted by a contactless interface. The holder 14 cooperates, over a short range RF link(s) (not represented), with the card 16 while being relatively close to each other.

The short range RF link may be fixed at 13,56 MHz for an RF that relates to a Near Fied Communication (or NFC).

The card 16 is a token.

For instance, instead of a smart card, the token may be a smart dongle of the USB type, or a chip to be fixed to the holder 14, as host device, possibly in a removable manner.

For instance, the card 16 may be a Subscriber Identity Module (or SIM) type smart card, a (micro) Secure Digital (or SD) type card, a micro-SD type card or a Multi-Media type Card (or MMC) or any card of another format.

The card 16 comprises a chip 162.

The card 16 chip includes preferably at least one microprocessor (not represented), as data processing means, at least one memory (not represented) and at least one I/O interface (not represented) which are internally linked together through a data and control bus (not represented).

The card I/O interface includes preferably an ISO 7816 interface, so as to let communicate, through the bi-directional link 15, the card 16 and the holder 14.

The communication, through the holder 14, between the card 16 and the phone 12 may be used in particular for benefitting from the MMI of the phone 12 and exchanging data between the card 16 and the phone 12.

The card user has preferably subscribed to a service(s).

The card microprocessor may be able to initiate actions, in order to interact directly with the outside world, in an independent manner of the holder 14, as host device. Such a capacity of interaction at the initiative of the card 16 is also known as proactive capacity. The card 16 is thus enable to send, at its own initiative, to the holder 14 a proactive command to be forwarded, through the holder 14, to the phone 12, like a message, and/or another command for requesting a user to enter, through the phone 12 MMI, a Personal Identity Number (or PIN) and/or biometric data, as user authentication data.

The card microprocessor executes preferably security functions, in order to protect access to user information managed through or by the card 16.

The security functions may include a card authentication process. The card authentication process may use either a predetermined password, like a PIN, that is stored within the card memory or an authentication data generation algorithm, to generate data for authenticating the card 16, like a password. Such a generated password may be usable only once, as One Time Password (or OTP).

The security functions include preferably a user authentication process. The user authentication process may be used prior to reading data stored securely within the card 16. To authenticate the user, the card 16 may store an application for verifying user authentication data that is stored securely within the card memory and to be input by the card user. Thus, the card 16 compares user input to the stored user authentication data and authorize, only when successful, a further data processing.

The security functions may include an encryption/decryption process to be used for exchanging data, so as to protect access to data exchanged, through the holder 14, between the card 16 and the phone 12.

Preferably, the card 16 stores, within its memory, data for identifying the chip, such as an International Mobile Subscriber Identity (or IMSI) and/or an Integrated Circuit Card Identifier (or ICCID), as a unique number associated with all mobile radio-communication network(s) that may be used.

**Figure 2** shows an example of a message flow 20 that involves notably, at the phone 12 side, the first chip 23 and, at the holder 14 side, the second chip 25 and the holder 14 microprocessor.

A dotted line 21 separates the phone 12 side on the right from the holder 14 side on the left.

The first chip 23 is under control of the phone 12 while the second chip 25 is under control of the holder 14.

The first chip 23 and the second chip 25 exchange through the Bluetooth type wireless link 13.

In the explained example, the holder user desires to benefit from a service offered by or through the holder 14. Such a user desire implies to pair the phone 12, amongst several possible Bluetooth enabled interlocutories of the holder 14, with the holder 14.

It is assumed that the holder 14 is sufficiently close to the phone 12, so as to allow establishing a Bluetooth type connection between the holder 14 and the phone 12.

It is also assumed the phone display screen 126 displays an application list including the first application.

Firstly, the phone user selects, through the phone 12 MMI, the first target application.

The phone 12 triggers an execution of the selected first target application.

The phone 12 launches preferably an inquiry for discovering at least one device, so as to know whether at least one Bluetooth enabled device is present in the vicinity of the phone 12.

The phone 12 (more exactly, its microprocessor) (not represented) sends to the first chip 23 (more exactly, its microprocessor) a command (not represented) for requesting the first chip 23 to transmit an inquiry for discovering at least one device.

The first chip 23 sends to the second chip 25 (more exactly, its microprocessor) a message 22 for requesting the holder 14 a Bluetooth enabled device name and a corresponding address.

In the described data exchange, the second chip 25 does not inform the holder microprocessor, as first chip controller, about a launched inquiry.

Alternatively, the second chip 25 sends to the holder 14 (more exactly, its microprocessor) an event for informing it about a launched inquiry.

The phone 12 sends to the first chip 23 a command (not represented), like for instance "HCl_CREATE_CONNECTION_OCF", for requesting the first chip 23 to send to the identified holder 14, so as to create a link or connection, as first connection request. The command includes the holder address to be used by the first chip 23 and a phone address allowing the holder 14 to address, over a created first link, the phone 12.

The first chip 23 as master sends to the second chip 25 as slave a message 26 for requesting the identified holder 14 to create a first link, as first connection request. This message 26 includes the phone address.

Then, the second chip 25 as slave sends to the holder 14 an event 28 for informing this latter about an occurrence of a first connection request, like for instance "CONNECTION_REQUEST_EVENT_HCl", along with the phone address.

The holder 14 stores, in a temporary manner, for instance in a Random Access Memory (or RAM), as volatile memory, the phone address.

The holder 14 as slave sends to the second chip 25 a command 210 for requesting the second chip 25 to accept the first connection request, like for instance "HCl_ACCEPT_CONNECTION_REQUEST", along with the holder address.

Then, the second chip 25 sends to the first chip 23 a message 212 for accepting the first connection request along with the holder address.

Once the first chip 23 receives such an acceptation for connecting the second chip 25, an HCl link or connection is thus established at the phone 12 initiative.

The second chip 25 sends back to the first chip 23 a message 24 for providing the phone 12 with a holder name, as Bluetooth enabled device name, and a corresponding holder address. The second chip 25 informs thus the phone 12 about a presence of the holder 14 while providing it with the holder name and the corresponding holder address.

The first chip 23 sends to the phone 12 a message (not represented) for informing the user, through the phone MMI, about a list of the detected Bluetooth enabled devices along with their respective Bluetooth enabled device names. The detected Bluetooth enabled device list includes the holder 14, as one possible phone interlocutory over a Bluetooth type wireless link.

The phone user selects the holder 14, as phone interlocutory and the device from which the user desires to benefit from a service offered by or through the holder 14.

The phone 12 as master may further exchange data with the holder 14.

Optionally, the phone 12 sends to the first chip 23 a command (not represented), for instance "SDP_ServiceSearchRequest", for requesting the first chip 23 to send to the holder 14 by using the holder address a service discovery request. The service discovery request allows discovering a service(s) or capability(ies), as profiles, supported or offered by the holder 14. SDP is an acronym for Service Discovery Protocol.

Optionally, the first chip 23 sends to the second chip 25 a message 27 for requesting a service discovery.

Optionally, the second chip 25 sends to the holder 14 a message 29 for requesting the holder 14 a service discovery.

Optionally, the holder 14 sends to the second chip 25 a command 211, for instance "SDP_ServiceSearchResponse", for requesting the second chip to send, as response to service discovery request, a message including data for indicating that the holder 14 supports at least one profile as slave while listing it(them), like a headset profile and/or a hands-free profile. Even if the holder 14 declares the profile(s) as slave that the holder 14 supports, the holder 14 does not need to effectively support the profile(s) as slave. Such a dummy profile(s) as slave that is declared to be supported by the holder 14 allows inciting the phone 12 to establish a Bluetooth type wireless connection while using a dummy profile with the phone 12 as master.

Optionally, the second chip 25 sends to the first chip 23 a message 213 including data relating to an address of the holder 14 and data for indicating that the holder 14 supports at least one profile as slave while listing it(them), like for instance a headset profile and/or a hands-free profile.

The phone display screen 126 displays preferably a list of detected Bluetooth enabled devices with the holder 14.

Alternatively, instead of displaying the detected Bluetooth enabled device list, the phone 14 publishes, over a phone loudspeaker, the detected Bluetooth enabled device list.

The phone 12 sends to the first chip 23 a command (not represented), like for instance "RFCOMM_PN_CMD", for requesting the first chip 23 to transmit to the identified holder 14 a second connection request, so as to create a further link that is above a previous established HCl link. The command includes the phone address allowing the holder 14 to address, over a created second link, the phone 12.

The first chip 23 as master sends to the second chip 25 as slave a message 214 for requesting to pair with the phone 12 while using, for instance a requested headset profile, in which the phone 12 is master while the holder 14 is slave. The message 214 for requesting to pair with the phone 12, as pairing request, includes the phone address.

Then, the second chip 25 sends to the holder 14 an event 216 for informing this latter about an occurrence of a second connection request, like for instance "RFCOMM_PN_CMD", along with the phone address.

The holder 14 stores, in a definitive manner, for instance in a flash memory, as non-volatile memory, the phone address. Such a definitive storage allows avoiding to resume such a mechanism for retrieving the phone address.

Alternately, the holder 14 stores, in a temporary manner, in a RAM, as volatile memory, the phone address.

The holder 14 knows therefore the phone address. Thus, the holder 14 is able to use it for another connection to be established with the phone 12 while using another profile, for instance a PAN profile, in which the holder 14 plays the role of master while the phone 12 plays the role of slave.

The holder 14 and the phone 12 further exchange preferentially data, through the first 23 and second 25 chip, so as to authenticate a user. The user authentication may be a PIN verification by using a PIN entered by the user with the phone MMI. Only when the PIN matches a reference PIN stored within the holder 14 allows continuing a data processing at both sides, namely the phone 12 and the holder 14.

Optionally, a user validates a further connection establishment by depressing a button provided on the holder 14 after a lamp, like a Light-Emitting Diode (or LED), switches on to indicate that a connection establishment is under progress and prompt the user for her/his approval or refusal (without depressing the button during a predefined time period).

The holder 14 sends to the second chip 25 a command 218, like for instance "RFCOMM_PN_RSP", for requesting the second chip 25 to accept the second connection request along with the holder address.

Then, the second chip 25 sends to the first chip 23 a message 220 for accepting the second connection request along with the holder address.

Once the first chip 23 receives such an acceptation for connecting the second chip 25, an RFCOMM link or connection, as second connection, is thus established. The second connection is above the first connection in an Open Systems Interconnection (or OSI) model.

At an initiative of the holder 14, the holder 14 sends to the second chip 25 a command 222, for instance "RFCOMM DISC", for requesting the second chip 25 to close the requested connection with the phone 12 by using a requested profile. The command 222 includes a closure of a connection, as slave, with the phone 12 as master by using a requested profile.

Alternately, instead of a message encompassing a closure of a connection, as slave, with the phone 12, the holder 14 sends to the second chip 25a message (not represented) including a refusal for pairing, as slave, with the phone 12 by using a requested profile .

The second chip 25 sends to the first chip 23 a message 224 for closing the established connection.

The first and second connections established at the phone 12 initiative, i.e. the phone 12 as master, with the holder 14 are thus both closed and aborted.

The holder 14 as master may then attempt to connect back to the phone 12 as slave.

The holder 14 sends to the second chip 25 a command 226, like for instance "HCl_CREATE_CONNECTION_OCF", for requesting the second chip 25 to create with the identified phone 12 a link or connection. The command 226 includes an address of the phone 12 to be addressed and used by the second chip 25 and a holder address to be forwarded to the phone 12. The holder address allows the phone 12 to address, over a created link, the holder 14.

The second chip 25 as master sends to the first chip 23 as slave a message 228 for requesting the identified phone 12 to create a link, as third connection request. This message 26 includes the holder address.

The role of the first chip 23 is changed from a master role to a slave role and inverted.

Then, the first chip 23 as slave sends to the phone 12 an event (not represented) for informing this latter about an occurrence of a third connection request, like for instance "CONNECTION_REQUEST_EVENT_HCl", along with the holder address.

The phone 12 stores, in a temporary manner, for instance in a RAM, as volatile memory, the holder address.

The phone 12 as slave sends to the first chip 23 a command (not represented) for requesting the first chip 23 to accept the third connection request, like for instance "HCl_ACCEPT_CONNECTION_REQUEST", along with the phone address.

Then, the first chip 23 sends to the second chip 25 a message 230 for accepting the third connection request along with the phone address.

Once the second chip 25 receives such an acceptation for connecting the first chip 23, an HCl link or connection is thus established at the holder 14 initiative.

The second chip 25 sends to the holder 14 an event 232 for informing the holder 14 that a third connection with the identified phone 12 is established.

The holder 14 sends to the second chip 25 a command 234, like for instance "BNEP_SETUP_CMD_REQUEST_MSG" for requesting the second chip 25 to send a request to pair with the phone 12 while using a requested profile in which the holder 14 is master while the phone 12 is slave. The command 234 for requesting to pair with the holder 14, as pairing request, includes the phone address to be used by the second chip 25 and the holder address.

The holder 14 may include within the command 234 other parameters, like one or several authentication and/or encryption key(s) allowing the phone 12 and the holder 14 to exchange data in a secure manner.

The second chip 25 as master sends to the first chip 23 as slave a message 236 for requesting to pair with the holder 14 while using, for instance a requested PAN profile, in which the holder 14 is master while the phone 12 is slave. The message 236 for requesting to pair with the holder 14, as pairing request, includes the holder address.

The phone 12 sends to the first chip 23 a command (not represented), like for instance "BNEP_SETUP_CMD_RESPONSE_MSG" for requesting the first chip 23 to accept to pair with the holder 14 while using the requested profile. The command for accepting to pair with the holder 14, as pairing acceptation, includes the phone address to be used by the second chip 25 and the holder address to be used by the first chip 23 to identify its interlocutory.

Then, the first chip 23 sends to the second chip 25 a message 238 for accepting to pair with the holder 14 while using the requested profile in which the holder 14 plays the role of master while the phone 12 plays the role of slave. The first chip 23 may include in the message 238 other parameters, like one or several authentication and/or encryption key(s) allowing the phone 12 and the holder 14 to exchange data in a secure manner.

The holder 14 sends to the second chip 25 a message 240 for accepting to pair with the holder 14 while using the requested profile.

The phone 12 and the holder 14 are thus paired with each other.

The holder 14 is thus configured to set up a communication channel as master.

The holder 14 may further send, through their respective chip, to the phone 12 a list of one or several services offered by or through the holder, as data for accessing at least one service supported by the holder 14. As service offered by or through the holder 14, it may include a fingerprint reading service, a local network access service and/or a smart card reading/writing service.

The invention solution is user friendly since the user does not only need to select the holder 14, as the target Bluetooth enabled device. The user does not have to install any application on the phone 12.

The invention solution is compliant with the Bluetooth standard. There is thus no need to use, besides the Bluetooth communication channel, another communication channel.

Moreover, the invention solution may be secure since a user authentication, a secure channel, and/or any other security function may be carried out.

## Claims

1. A method (20) for communicating data between a first device (12) and a second device (14),
**characterized in that**, a first device including or being connected to a Man Machine Interface (124, 126), the first device supporting a first profile as slave, the first device supporting a second profile as master, a second device supporting at least the first profile as master, the method comprises the following steps:
- the first device, as master, sends to the second device, as slave, data (214) relating to an address of the first device, said first device address;
- the second device stores the first device address; and
- the second device, as master, sends to the first device, as slave, data (236) relating to an address of the second device, said second device address, by using the first profile.

2. Method according to claim 1, wherein the method further includes a pairing refusal step in which the second device, as master, sends, thanks to the first device address, to the first device, a refusal for pairing, as slave, with the first device by using the second profile.

3. Method according to claim 1, wherein the method further includes a connection closure step in which the second device, as master, sends, thanks to the first device address, to the first device, a closure (224) of a connection, as slave, with the first device by using the second profile.

4. Method according to any of claims 1 to 3, wherein the method further includes:
- the first device, as master, sends to the second device a request for discovering at least one profile as slave that the second device supports;
- the second device, as slave, sends to the first device, as response to the request, data for indicating that the second device supports at least one profile as slave.

5. Method according to any of claims 1 to 4, wherein the first device and the second device exchange data over a short range wireless link (13).

6. Method according to claim 5, wherein the short range wireless link relates to a Bluetooth type technology.

7. Method according to any of claims 1 to 6, wherein the first profile includes at least one profile comprising a Personal Area Network profile and a Subscriber Identity Module access profile and/or the second profile includes at least one profile comprising a headset profile and a hands-free profile.

8. Method according to any of claims 1 to 7, wherein the method further includes a step in which the second device sends to the first device data for accessing at least one service supported by the second device.

9. A second device (14) for communicating data with a first device (12), **characterized in that**, a first device including or being connected to a Man Machine Interface (14, 126), the first device comprising means for supporting a first profile as slave, the first device comprising means for supporting a second profile as master, a second device comprising means for supporting at least the first profile as master, the second device is adapted to:
- receive, as slave, data (214) relating to an address of the first device, said first device address;
- store the first device address; and
- send, as master, to the first device, as slave, data (236) relating to an address of the second device, said second device address, by using the first profile.

10. A system (10) for communicating data,
**characterized in that** the system comprises at least one first device (12) and a second device (14), the first device including or being connected to a Man Machine Interface (124, 126), the first device comprising means for supporting a first profile as slave, the first device comprising means for supporting a second profile as master, the second device comprising means for supporting at least the first profile as master,
**in that** the first device, as master, is adapted to send to the second device, as slave, data (214) relating to an address of the first device, said first device address;
**in that** the second device is adapted to:
- store the first device address; and
- send, as master, to the first device, as slave, data (236) relating to an address of the second device, said second device address, by using the first profile.
